# EUROPEAN PATENT SPECIFICATION

(11) **EP 4 010 649 B1**
(45) Date of publication and mention of the grant of the patent: **04.10.2023**
(21) Application number: 20757961.6
(22) Date of filing: 04.08.2020
(51) Int. Cl.: F28D 1/02, F28D 7/00, F28F 7/02, F28F 21/08, C02F 11/18, C10G 1/00

(54) **COST EFFECTIVE HEAT EXCHANGERS FOR THERMOCHEMICAL BIOMASS CONVERSION**
KOSTENEFFIZIENTE WÄRMETAUSCHER FÜR THERMOCHEMISCHE BIOMASSEKONVERSION
ÉCHANGEUR THERMIQUE ÉCONOMIQUE POUR CONVERSION THERMOCHIMIQUE DE BIOMASSES

(30) Priority: 07.08.2019 GB 201911294
(43) Date of publication of application: 15.06.2022
(73) Proprietor: Circlia Nordic ApS, 8210 Aarhus V (DK)
(72) Inventor: JOHANNSEN, Ib, 8000 Aarhus C (DK)
(74) Representative: Patentgruppen A/S
(86) International application number: PCT/IB2020/057354
(87) International publication number: WO 2021/024176

(56) References cited:
- EP-A1- 3 193 116
- EP-A2- 1 770 251
- DE-A1- 10 117 321
- GB-A- 2 117 504
- US-A- 2 443 295
- US-A- 3 570 593
- US-A- 4 625 789
- US-A- 4 782 892
- US-A1- 2007 209 997
- US-A1- 2010 203 608
- US-A1- 2014 142 353
- US-A1- 2019 041 136

## Description

This invention relates to a heat exchanger for a thermochemical biomass converter.

Thermochemical biomass converters typically work in high temperate, high pressure conditions and with highly reactive process medium (e.g. aqueous acids or bases, polar solvents like ethanol or tetrahydrofurane, or mixtures thereof). The process medium also typically has a high viscosity due to the biomass content and is thus prone to clogging. This is particularly true of thermochemical converters using hydrothermal conversion, including hydrothermal liquefaction (HTL), hydrothermal carbonization (HTC), or hydrothermal gasification. In such conversion processes, highly viscous suspensions of biomass are heated to 190°C to 450°C at pressures of between 50 to 300 bar. Moreover, biomass conversion may be improved by adding strong oxidants (e.g. oxygen or hydrogen peroxide) in the so-called hydrothermal wet-oxidation processes or reducing agents such as formic acid or hydrogen (hydrotreatment). In these cases, the corrosively of the medium is significantly enhanced beyond the already corrosive properties of high temperature, pressurized water and organic acids evolved during the conversion process. Corrosively thus poses extra challenges to the selection of materials for conversion systems. The economy of all these processes is highly dependent on efficient heat recovery and thus efficient heat exchangers are vital to the success and viability of the processes.

It is known to transfer heat from one medium to another to either cool or heat the medium. However, in thermochemical conversion, and more specifically hydrothermal conversion, the heating and cooling operational expenses can ruin process economy completely if efficient heat exchange cannot be obtained. Moreover, the processes are commonly favored by high heating and cooling rates to avoid side-reactions that are prone to occur at intermediate temperatures.

A known heat exchanger is disclosed in United States patent application US 2017/233327. E.g., the heat exchanger may be a tube-by-tube configuration joined in a highly thermally conductive material. The heat exchanger may comprise two tube parts joined together in a solid matrix of relatively good heat conducting material.

According to a first aspect of the invention there is provided a heat exchanger for a thermochemical biomass converter, the heat exchanger comprising first and second conduits being configured to carry, in use, process medium of the converter, and a heat transfer member thermally connecting the first and second conduits to one another to define a heat transfer medium between the conduits, wherein the heat transfer member includes first and second support formations configured to position and support a respective first and second conduit in the heat exchanger,
characterized in that the heat transfer member has a higher heat conductivity than the materials used for the first and second conduit; and
wherein the conduits are made with an intentional expansion of the conduit material into an expanded fit with the heat transfer member;
and further characterized in that conduits in the absence of structural support from a heat transfer member have pressure rating within the range 5 to 75 bar but in combination with a single heat transfer member or with a plurality of similar individual heat transfer members can operate at pressures within the range 100 to 300 bar.

Using the temperature difference between the first and second conduits, and thus between the process medium in the converter, to cause heat transfer means that direct heat exchange between the process medium is achieved. This is in contrast to using an external heat transfer medium, e.g. steam, molten salt or thermal oil, which would require more components and thus increase the size, cost and complexity of the heat exchanger.

In particular, the temperatures needed especially for HTL and HTG conversion processes are so high that there would be severe stability issues with using thermal oils as an external heat transfer medium. If water/steam is used the pressure in the secondary heat transfer circuits may exceed pressures corresponding to supercritical temperatures, thus adding significantly to the risk and cost of such conversion processes. Molten salt could be used, but the properties of such media are prone to create significant problems in terms of corrosion and in terms of loss of power clogging due to solidification. Moreover, in each case, the use of an external heat transfer medium would require two thermal transfer processes i.e. one from the hot process stream to the external heat transfer medium and another from this to the cold process stream, thus increasing the potential for losses in the heat transfer process.

In addition to the foregoing, standard known external heat exchangers such as plate, shell, tube/double tube and spiral, are not effective under the extreme conditions (i.e. high pressure, high temperate conditions with high viscosity medium that is prone to clogging) of a thermochemical biomass converter. For plate heat exchangers, this is because they cannot withstand the very high pressures; for tube in tube heat exchangers, clogging will occur due to the narrow passage in the outer shell; for shell and tube heat exchangers, the problems are in relation to the high pressure on the outer shell and to the limited degree of ideal counter current heat exchange that is needed in this process (this is in addition to possible clogging issues); for spiral heat exchangers, there are pressure limitations and clogging issues means that they are not suited for extreme conditions.

Direct heat exchange between feed stream and product stream allow efficient and balanced recovery of thermal energy. Also, since the flows can be made perfectly counter current, a high thermal transfer rate can be obtained.

Meanwhile, the use of heat transfer members including first and second support formations means that the conduits can be made from a thin amount of material because they are provided with structural support from the heat transfer member. The conduits being made from a thin amount of material reduces costs because less of the expensive conduit material is required. The conduits are expensive because the material that they are made from must be able to withstand the high temperature and highly corrosive process medium of the converter, and so the heat exchanger requiring less of this material reduces the overall cost. In contrast, the heat transfer member, which does not contact the process medium, does not require properties which can withstand direct contact with the high temperature and highly corrosive process medium. Instead, the heat transfer member needs only to be thermally conductive and strong enough to provide structural support to the conduits. A wide variety of materials with such properties are available, and so a low-cost material can be selected for the heat transfer member to reduce the overall cost of the heat exchanger.

Moreover, the conduits being made from a thin amount of material helps to facilitate the direct heat transfer between the conduits. In this regard, the types of materials that are able to withstand the extreme conditions that the conduits are exposed to tend to have poor heat conductivity. Thus, the thin conduits permit a greater heat transfer between the conduits.

Preferably, the first and second support formations of the heat transfer member are integrally formed with the heat transfer member such that it has a profile that is complimentary to the profiles of the first and second conduits.

The thermal expansion coefficient of the first and second conduits may be matched to the thermal expansion coefficient of the heat transfer member to continually provide thermal connection between the heat transfer member and the conduits under changing temperature conditions.

Matching the thermal expansion coefficients of the heat transfer member and both conduits means that the thermal connection between the conduits (as provided by the heat transfer member) remains good throughout operation of the thermochemical biomass converter (during which there will be changing temperature conditions). If the thermal expansion coefficients were not matched correctly then compression or expansion can occur in the components, thus rendering the heat exchanger unworkable.

It will be understood that the thermal expansion coefficients of the conduits and the heat transfer member being "matched" means that they must be suitably similar (not necessarily the identical) so that the heat transfer member is able to continue to operate as a heat transfer medium between the two conduits throughout operation of the converter.

The thermal expansion coefficient of the first and second conduits may be matched to the thermal expansion coefficient of the heat transfer member to a difference of less than 2.5 ×10⁻⁶ K⁻¹. Preferably, the thermal expansion coefficient of the first and second conduits is matched to the thermal expansion coefficient of the heat transfer member to a difference of less than 1.5 ×10⁻⁶ K⁻¹, and more preferably to a difference of less than 0.5×10⁻⁶ K⁻¹.

Matching the thermal expansion coefficients of the conduits to that of the heat transfer member in such orders of magnitude provides reliable and efficient heat exchange under changing temperature conditions of the thermochemical biomass converter.

Preferably, the first and second conduits are made from a nickel alloy. Preferably, the first and second conduits are made solely from such nickel alloy. More preferably, the first and second conduits are made from (optionally, solely from) nickel-chromium-based super-alloys. One such super-alloy is Inconel^{®}, such as Inconel^{®} 625.

Preferably, the heat transfer member is made from steel. The steel may be any steel providing it has more than 90% Fe content (i.e. it is a steel, rather than an iron alloy).

Optionally the first and second support formations are configured to provide a spatially complementary fit to a contact portion of a respective first and second conduit, the remaining portion of each first and second conduit being left exposed relative to the respective support formation.

The support formations abutting a contact portion of a respective conduit while leaving another portion exposed allows the support formations to provide support to a respective conduit (i.e. at the contact portion) while permitting ready assembly of another heat exchanger in relation to the exposed portion of the conduits. This means that each conduit can form part of a further heat exchanger for direct heat exchange from that conduit to another, further conduit. In other words, each conduit can be shared between neighbouring heat exchangers in a heat exchanger assembly.

In one embodiment of the invention the heat transfer member may include an engagement surface configured to engage with an engagement surface of a further heat exchanger to arrange the heat exchangers linearly relative to one another.

The inclusion of such an engagement surface permits the heat exchanger to be coupled to additional heat exchanger to increase the efficiency of the heat exchange properties. The engagement surface permitting the heat exchangers to be arranged linearly relative to one another means that any number of heat exchangers can be arrangement relative to one another in an easily assembled manner.

In another embodiment of the invention the heat transfer member may include an engagement surface configured to engage with an engagement surface of a further heat exchanger to arrange the heat exchangers radially relative to one another.

The inclusion of such an engagement surface permits the heat exchanger to be coupled to additional heat exchangers to increase the efficiency of the heat exchange properties. The engagement surface permitting the heat exchangers to be arranged radially relative to one another means that the heat exchangers can be arranged in a circular fashion. Such an arrangement is particularly useful where the heat exchangers share a conduit between them, and so the circular arrangement forms a "closed" system in the sense that no conduits are left exposed. Therefore, the conduits in such an assembly are exchanging heat at both sides.

Optionally the heat exchanger includes two discrete heat transfer members, the two discrete heat transfer members cooperating with one another to thermally connect the first and second conduits to one another to define a heat transfer medium between the conduits.

Including two such heat transfer members allows different securing techniques to be used to assemble the heat exchanger with further heat exchangers. Moreover, different materials for the discrete heat transfer members can be chosen depending on the requirements of the heat exchanger.

According to second aspect of the invention there is provided a heat exchanger assembly including a plurality of heat exchangers as described hereinabove arranged adjacent to one another so that neighbouring heat transfer members share a conduit.

The advantages of the heat exchanger of the first aspect of the invention and its embodiments applies mutatis mutandis to the heat exchanger assembly of the second aspect of the invention and its embodiments.

The plurality of first and second conduits may be linearly arranged relative to one another. The plurality of first and second conduits may instead be annularly arranged relative to one another.

Optionally, each heat transfer member is a portion of a single piece heat transfer member block.

The heat transfer members being a portion, i.e. section, of a single piece heat transfer member block means that no joining, e.g. welding, is required to form the heat exchanger assembly. A heat exchanger assembly may typically be 150m long, and so a significant amount of additional material, time and weight is saved by not requiring joining, e.g. welding, of the components.

In embodiments wherein two discrete heat transfer members (which cooperate with one another to thermally connect the first and second conduits to one another) are included, each of the discrete heat transfer members may be a portion of a respective single piece heat transfer member block.

Moreover, the plurality of first and second conduits may be annularly arranged relative to one another with one of the heat transfer member blocks being positioned as an inner block and the other of the heat transfer member blocks being positioned as an outer block relative to the annular array of conduits.

Such an arrangement does not require any joining, e.g. welding, to form the heat exchanger assembly since the single piece inner and outer heat transfer member blocks and the conduits can be fitted together (e.g. by performing a hot assembly) to secure each component in place. A heat exchanger assembly may typically be 150m long, and so a significant amount of additional material, time and weight is saved by not requiring joining, e.g. welding, of the components.

According to a third aspect of the invention there is provided a thermochemical biomass converter including a heat exchanger as described hereinabove.

The advantages of the heat exchanger of the first aspect of the invention and its embodiments applies mutatis mutandis to the thermochemical biomass converter of the third aspect of the invention and its embodiments.

Preferred embodiments of the invention will now be described, by way of non-limiting examples, with reference to the accompanying drawings in which:
Figure 1a shows a profile view of a first example of a heat exchanger according to a first embodiment of the invention;
Figure 1b shows a profile view of a second example of a heat exchanger according to the first embodiment of the invention;
Figure 2 shows a profile view of a heat exchanger assembly including a plurality of the heat exchangers shown in Figure 1b;
Figure 3 shows a perspective view of the heat exchanger assembly of Figure 2;
Figure 4 shows a profile view of a heat exchanger according to a second embodiment of the invention;
Figure 5 shows a profile view of a heat exchanger assembly including a plurality of the heat exchangers shown in Figure 4;
Figure 6a shows a perspective view of the heat exchanger assembly of Figure 5 with a straight longitudinal profile;
Figure 6b shows a perspective view of the heat exchanger assembly of Figure 5 with a curved longitudinal profile;
Figure 7 shows a profile view of a heat exchanger according to a third embodiment of the invention forming part of a heat exchanger assembly;
Figure 8 shows a profile view of a heat exchanger according to a fourth embodiment of the invention forming part of a heat exchanger assembly;
Figure 9a shows a perspective view of the heat exchanger assembly of Figure 8 with a straight longitudinal profile;
Figure 9b shows a perspective view of the heat exchanger assembly of Figure 8 with a curved longitudinal profile;
Figure 10 shows a clamp flange system for the assembly of heat exchanger sections, and
Figure 11 shows a manifold with integrated valve distributor to allow for individual control of the flow in each conduit. The valve heads with actuators are omitted for clarity.

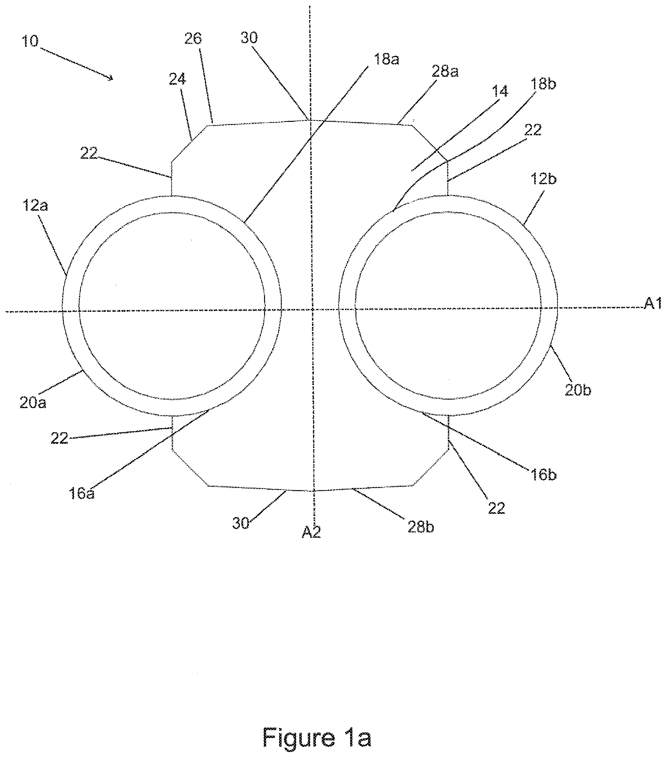

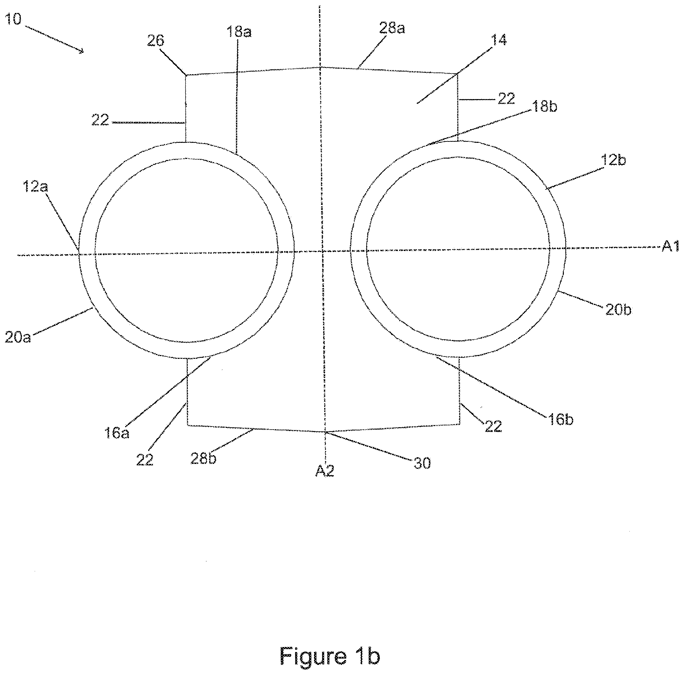

A heat exchanger for a thermochemical biomass converter according to a first embodiment of the invention is shown in Figures 1 to 3 and is designated generally by reference numeral 10.

The heat exchanger 10 includes first and second conduits 12a, 12b and a heat transfer member 14 that thermally connects the first and second conduits 12a, 12b to one another to define a heat transfer medium between the conduits 12a 12b.

The first and second conduits 12a, 12b are configured to carry process medium of the thermochemical biomass converter in which the heat exchanger 10 is incorporated. The process medium being carried by the first conduit 12a may be a feed stream, e.g. sewage sludge with dry matter content of 20% in water or fibrous woody biomass with dry matter content of 16% in water with added sodium hydroxide, which has a first temperature. The process medium being carried by the second conduit 12b may be a product stream, e.g. a complex stream of high viscosity biocrude in water together with dissolved carbon dioxide and suspended solids, which has a second temperature. The first and second temperatures differ from one another. For example, cold, e.g. 20°, feed stream is heated using the product stream (plus extra energy) to a high temperature, e.g. 350°, then once the reaction has taken place the feed stream is used to cool it down to e.g. 50°.

The thermal expansion coefficient of the first and second conduits 12a, 12b matches that of the heat transfer member 14 so as to continually provide a thermal connection between the heat transfer member 14 and conduits 12a, 12b under changing temperature conditions.

In the embodiment shown, the first and second conduits 12a, 12b have a continuous tubular profile. Having such a profile significantly reduces the risk of clogging and eases maintenance of the conduits 12a, 12b because the tubular profile is easy to clean, thus preventing potential fouling layers being created in the conduits.

The first and second conduits 12a, 12b are made from an Inconel^{®} Alloy 625 (a nickel-based super alloy) and the heat transfer member 14 is made from a cast steel which results in the thermal expansion coefficients of the two materials being matched to a difference of 0.2 ×10⁻⁶ K⁻¹.

In other embodiments of the invention, the first and second conduits 12a, 12b and the heat transfer member 14 may be made from any other suitable materials which result in the thermal expansion coefficients of the two materials being matched to a difference of less than 2.5 ×10⁻⁶ K-1, and preferably less than 1.5 ×10⁻⁶ K⁻¹. Even more preferably, a difference of less than 0.5 ×10⁻⁶ K⁻¹

It will be understood that suitable materials for the conduits 12a, 12b must be able to withstand the working conditions of a thermochemical biomass converter, such as high temperatures (e.g. 250 to 450 °C) and contact with corrosive medium. For example, the first and second conduits 12a, 12b may be made from high alloy steels (such as ss310 or ss316), nickel alloys (such as Hastelloy^{®} C, Inconel^{®} 625, Inconel^{®} 600), or titanium.

Meanwhile, the heat transfer member 14 must have a higher heat conductivity and lower cost than the materials used for the first and second conduits and have sufficient strength characteristics to support the first and second conduits 12a, 12b (as explained in more detail below). The heat transfer member 14 may be made from low alloy steel, black steel, and other temperature resistant alloys such as high-performance brass alloys

The materials and thermal expansion coefficient properties outlined above apply *mutatis mutandis* to the conduit and heat transfer member components of each of the other embodiments described below and shown in the remaining figures.

The heat transfer member 14 has first and second support formation 16a, 16b that position and support the first and second conduits 12a, 12b within the heat exchanger 10.

In the embodiment shown in Figures 1a and 1b, the first support formation 16a abuts a contact portion 18a of the first conduit 12a, and the second support formation 16b abuts a contact portion 18b of the second conduit 12b. The remainder of the first and second conduits 12a, 12b, i.e. which is not being supported by the support formations 16a, 16b, is left exposed relative to the corresponding support formation 16a, 16b. In the embodiment shown, the split between the exposed portion 20a, 20b and the contact portion 18a, 18b of each conduit 12a, 12b is 50:50, i.e. the contact portion 18a, 18b extends over half of the surface of the corresponding conduit 12a, 12b leaving the other half exposed. In other embodiments, the contact portion 18a, 18b may extend over more or less than half of the surface of the corresponding conduit 12a, 12b.

The heat transfer member 14 shown in Figures 1 to 3 has an I-shaped profile, with the support formations 16a, 16b being formed as semi-circular indentations which receive the respective conduit 12a, 12b. The support formations 16a, 16b are formed in the heat transfer member 14 so that the first and second conduits 12a, 12b are positioned side by side and share a central axis.

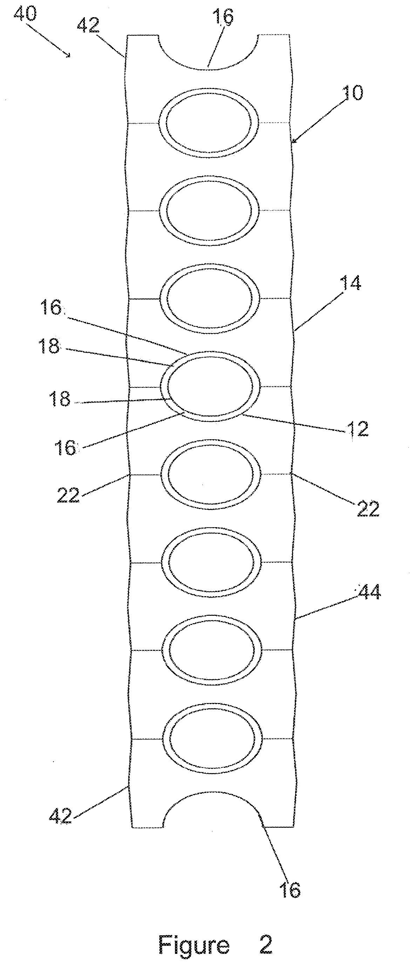

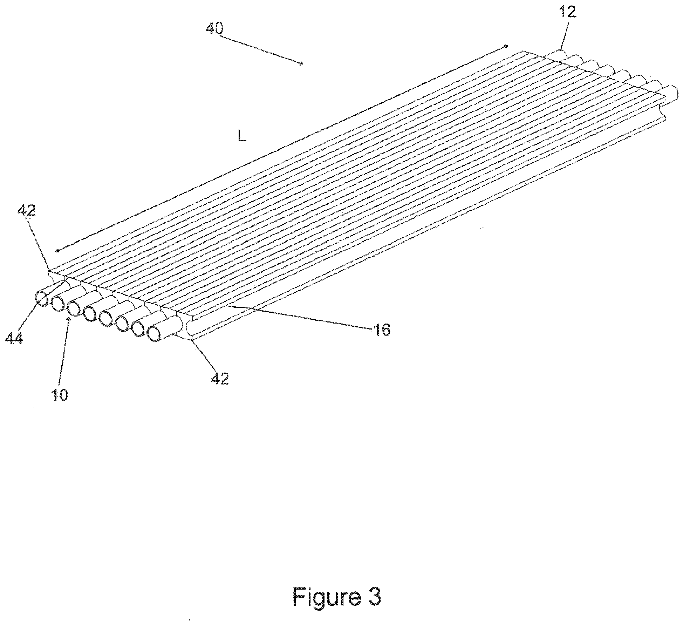

The heat transfer member 14 also includes engagement surfaces 22 which are configured to engage with an engagement surface of a further heat exchanger (as described in more detail below in relation to Figures 2 and 3). The engagement surfaces 22 are formed at either side of the support formations 16a, 16b and extend perpendicular to a first axis A₁ (as described in more detail below) so as to abut another engagement surface of a further heat exchanger to arrange the heat exchangers in a linear fashion relative to one another.

The heat exchanger 10 is symmetrical about a first axis A₁ which passes through the heat transfer member 14 and the centre of the both first and second conduits 12a, 12b. The heat exchanger 10 is also symmetrical about a second axis A₂ which passes through the centre of the heat transfer member 14 and is perpendicular to the first axis A₁.

The heat transfer member 14 may be formed by extrusion, hot rolling or cold drawing.

Two different profiles of the heat transfer member 14 are shown in Figures 1a and 1b. In Figure 1a, the heat transfer member 14 includes a welding chamfer 24 at each corner 26 of the heat transfer member 14. The heat transfer member 14 in Figure 1b does not include a chamfer at each corner 26.

In both examples, the top and bottom surfaces 28a, 28b, i.e. the surfaces devoid of support formations 16a, 16b, of the heat transfer member 14 include a peak 30 midway along the surface 28a, 28b. The surfaces 28a, 28b extend at an angle, e.g. 3°, from the peak 30 towards a respective corner 26 of the heat transfer member 14.

Figures 2 and 3 show a heat exchanger assembly 40 that includes a plurality of the heat exchanger 10 shown in Figure 1b. The heat exchanger assembly 40 may instead include a plurality of the heat exchanger 10 shown in Figure 1a.

Due to the arrangement of the heat exchangers 10, as described in more detail below, what was a "first" component (e.g. conduit 12a, support formation 16a, etc.) in Figures 1a and 1b of one heat exchanger 10 becomes the "second" corresponding component of the neighbouring heat exchanger 10. For this reason, these components in Figures 2 and 3 are not referred to as "first" and "second" and have been designated a single reference numeral (i.e. "12" instead of "12a") in the description below in relation to the heat exchanger assembly 40.

The heat exchangers 10 are arranged adjacent to one another so that neighbouring heat transfer members 14 share a conduit 12. More specifically, what was the exposed portion 20 of each conduit 12 is received by a support formation 16 of a neighbouring heat transfer member 14 so that the exposed portion 20 becomes another contact portion 18 of each conduit 12. In this way, each conduit 12 is fully enclosed by neighbouring heat transfer members 14.

As shown, the plurality of conduits 12 are arranged linearly relative to one another. More specifically, the engagement surfaces 22 on one side of the heat transfer member 14 abut engagement surfaces 22 on a side of a neighbouring heat transfer member 14.

The heat exchangers 10 are joined to one another along the abutment of neighbouring heat transfer members 14. Typically, the joining will be carried out by welding along the length L of the heat transfer members 14. Where a plurality of heat transfer members 14 as shown in Figure 1a are included in a heat exchanger assembly 40, the welding chamfers 24 define a small gap between neighbouring heat transfer members 14 and this is where welding takes place.

The heat exchanger assembly 40 has two end heat exchangers 42 and a plurality of intermediate heat exchangers 44 posited between the end heat exchangers 42. The intermediate heat exchangers 44 are identical to the heat exchanger 10 described above in relation to Figure 1b. The end heat exchangers 42 differ in that they include only a single conduit 12 which is shared with a neighbouring intermediate heat exchanger 44. Thus, the support formation 16 at each end of the heat exchanger assembly 42 is "empty", i.e. it has no conduit 12 received therein.

In other embodiments of the invention, the end heat exchangers 42 may not have an empty support formation 16 and may instead include a conduit 12 which is left exposed. In further embodiments of the invention, the end heat exchangers 42 may differ from the intermediate heat exchangers 44 in that the heat transfer member 14 may only include a single support formation 16 which receives a shared conduit 12.

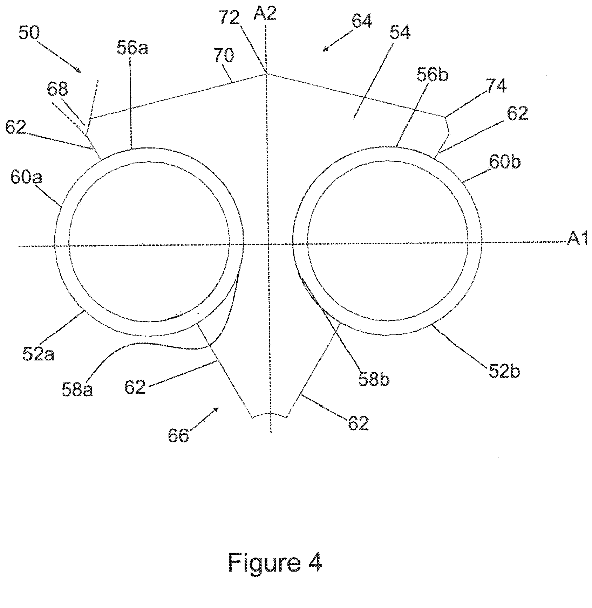

A heat exchanger for a thermochemical biomass converter according to a second embodiment of the invention is shown in Figures 4 to 6b and is designated generally by reference numeral 50.

The heat exchanger 50 includes first and second conduits 52a, 52b and a heat transfer member 54 that thermally connects the first and second conduits 52a, 52b to one another to define a heat transfer medium between the conduits 52a, 52b.

As described above in relation to the heat exchanger 10 shown in Figures 1a to 3, the first and second conduits 52a, 52b are configured to carry process medium of the thermochemical biomass converter in which the heat exchanger 50 is incorporated.

Also, as before, the thermal expansion coefficient of the first and second conduits 52a, 52b matches that of the heat transfer member 54 so as to continually provide thermal connection between the heat transfer member 54 and conduits 52a, 52b under changing temperature conditions.

The heat transfer member 54 has first and second support formations 56a, 56b that position and support the first and second conduits 52a, 52b within the heat exchanger 50.

The first support formation 56a abuts a contact portion 58a of the first conduit 52a, and the second support formation 56b abuts a contact portion 58b of the second conduit 52b. The remainder of the first and second conduits 52a, 52b, i.e. which is not being supported by the support formations 56a, 56b, is left exposed relative to the corresponding support formation 56a, 56b. In the embodiment shown, the split between the exposed portion 60a, 60b and the contact portion 58a, 58b of each conduit 52a, 52b is 50:50, i.e. the contact portion 58a, 58b extends over half of the surface of the corresponding conduit 52a, 52b leaving the other half exposed. In other embodiments, the contact portion 58a, 58b may extend over more or less than half of the surface of the corresponding conduit 52a, 52b.

The support formations 56a, 56b are formed as semi-circular indentations within the heat transfer member 54, which receive the respective conduit 52a, 52b.

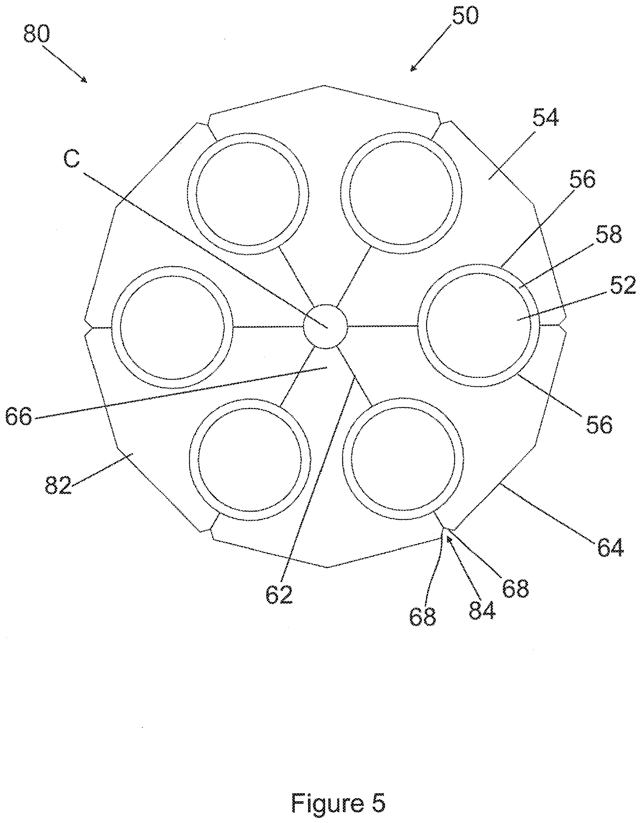

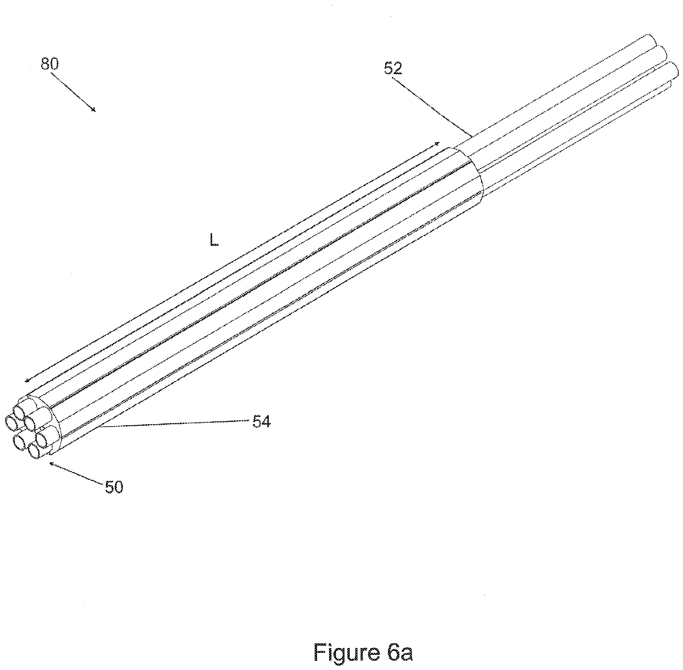

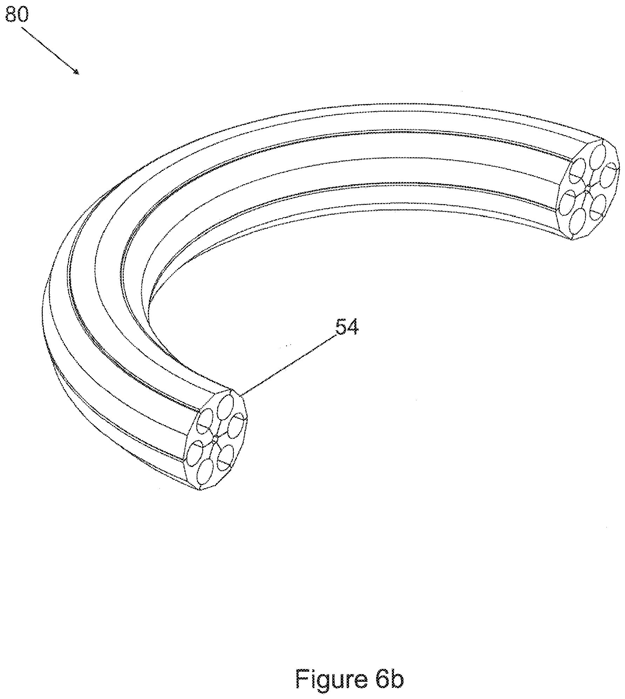

The heat transfer member 54 also includes engagement surfaces 62, which are configured to engage with an engagement surface of a further heat exchanger (as described in more detail below in relation to Figures 5, 6a and 6b). The engagement surfaces 62 are formed at either side of the support formations 56a, 56b and extend at an angle relative to a first axis A₁ (as described in more detail below) so as to abut another engagement surface of a further heat exchanger to arrange the heat exchangers 50 radially relative to one another.

The heat exchanger 50 is asymmetrical about a first axis A₁ which passes through the heat transfer member 54 and the centre of the both first and second conduits 52a, 52b. More specifically, the heat transfer member 54 tapers from a wider portion 64 on one side of the first axis A₁ to a narrower portion 66 on the other side of the first axis A₁.

The heat exchanger 50 is symmetrical about a second axis A₂ which passes through the centre of the heat transfer member 54 and is perpendicular to the first axis A₁.

The heat exchanger 50 forms a segment of a circular array of heat exchangers 50 (as described below in more detail in relation to Figures 5, 6a and 6b). The narrow portion 66 of the heat transfer member 54 coincides with a centre C of the circular array and the wider portion 64 coincides with a circumference 82 of the circular array (the centre C and circumference 82 are shown in Figure 5). Moreover, the engagement surfaces 62 are angled relative to the centre C of the circular array and the angle is chosen depending on the number heat exchangers 50 that are required in the circular array. In the embodiment shown in Figure 4, the angle between the opposing engagement surfaces 62 is 60°.

The opposing engagement surfaces 62 located towards the wider portion 64 of the heat transfer member 54 include a welding cutaway 68 so that those engagement surfaces 62 extend at a different angle to the engagement surfaces 62 located towards the narrow portion 66 of the heat transfer member 54. In the embodiment shown, the cutaway 68 forms an angle of 20° between the engagement surfaces 62 at the wider portion 64 of the heat transfer member 54 and the engagement surfaces 62 at the narrow portion 66.

In other embodiments, there may be no cutaway 68 present such that the engagement surfaces 62 at either side of the support formations 56a, 56b extend in line with one another (at the same angle relative to the centre C of the circular array).

The wider portion surface 70 of the heat transfer member 54 includes a peak 72 midway along the surface 70. The surface 70 extends at an angle, e.g. 3°, from the peak 72 towards a respective corner 74, i.e. towards the cutaway 68 in this embodiment, of the heat transfer member 54.

The heat transfer member 54 may be formed by extrusion or cold drawing, or a combination of these methods as well as steel casting methods, such as die casting or continuous casting.

Figures 5, 6a and 6b show a heat exchanger assembly 80 that includes a plurality of the heat exchanger 50 shown in Figure 4.

As before, "first" and "second" components are not referred to as "first" and "second" and have been designated a single reference numeral (i.e. "52" instead of "52a") in the description below in relation to the heat exchanger assembly 50 in Figure 4.

The heat exchangers 50 are arranged adjacent to one another so that neighbouring heat transfer members 54 share a conduit 52. More specifically, what was the exposed portion 60 of each conduit 52 is received by a support formation 56 of a neighbouring heat transfer member 54 so that the exposed portion 60 becomes another contact portion 58 of each conduit 52. In this way, each conduit 52 is fully enclosed by neighbouring heat transfer members 54.

As shown, the heat transfer members 54 are arranged in a circular array such that the plurality of conduits 52 are arranged also in a circular array. More specifically, the angled engagement surfaces 62 on one side of the heat transfer member 54 abut the angled engagement surfaces 62 on a side of a neighbouring heat transfer member 54. Moreover, as indicated above, the wider portion 64 of the array of heat transfer members 54 forms the circumference 82 of the assembly 80, and the narrow portions 66 of each heat transfer member 54 form the centre C of the assembly 80.

The heat exchangers 50 are joined to one another along the abutment of neighbouring heat transfer members 54. Typically, the joining will be carried out by welding along the length L of the heat transfer members 54 at the gap 84 created by neighbouring cutaways 68 of the heat transfer members 54.

Unlike the heat exchanger assembly 40 shown in Figures 2 and 3, there are no "end" heat exchangers, and thus no "empty" support formations nor exposed conduits 52 in the circular heat exchanger assembly 80 of Figures 5, 6a and 6b.

Figure 6a shows the heat exchanger assembly 80 extending in the lengthwise L direction in a straight line, i.e. for use with straight sections of conduits 52. Figure 6b shows the heat exchanger assembly 80 extending in the lengthwise L direction in a curved manner, i.e. for use with bent/curved sections of conduits 52 (which are omitted from Figure 6b for clarity purposes).

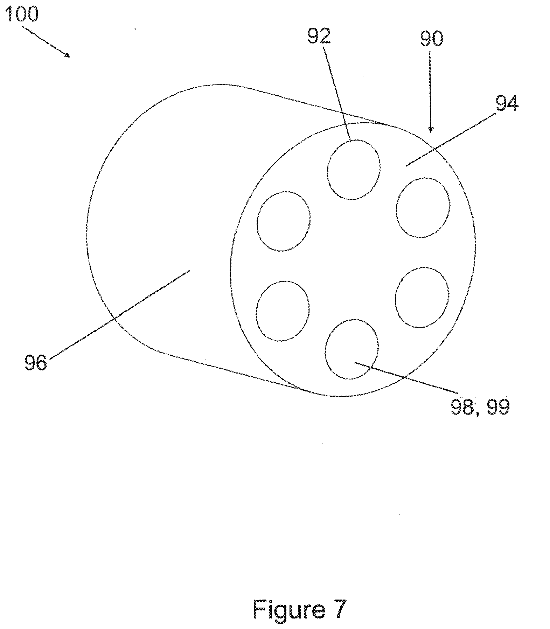

A heat exchanger for a thermochemical biomass converter according to a third embodiment of the invention is shown in Figure 7 and is designated generally by reference numeral 90.

The heat exchanger 90 includes conduits 92 and a heat transfer member 94 that thermally connects the conduits 92 to one another to define a heat transfer medium between the conduits 92.

In this embodiment, the heat transfer member 94 is a portion of a single piece heat transfer member block 96. The heat transfer member block 96 has openings 98 formed therein to receive a respective conduit 92. The openings 98 are formed by drilling a hole in the block 96. As shown, there are six openings 98 to receive six conduits 92. However, fewer or more openings 98 may be present.

As described above in relation to the heat exchanger 10 shown in Figures 1a to 3, the conduits 92 are configured to carry process medium of the thermochemical biomass converter in which the heat exchanger 90 is incorporated.

Also, as before, the thermal expansion coefficient of the conduits 92 matches that of the heat transfer member 94 so as to continually provide thermal connection between the heat transfer member 94 and conduits 92 under changing temperature conditions.

The openings 98 formed in the heat transfer member 94 define support formations 99 that position and support a respective conduit 92 within the heat exchanger 90.

The heat transfer member block 96 and conduits 92 together form a heat exchanger 100.

As can be seen, the heat exchanger 100 has a circular profile such that the conduits 92 are arranged in a circular array.

Unlike the heat exchanger assemblies 40, 80 of the first and second embodiments, no joining (i.e. welding) is required to create the heat exchanger 100 shown in Figure 7.

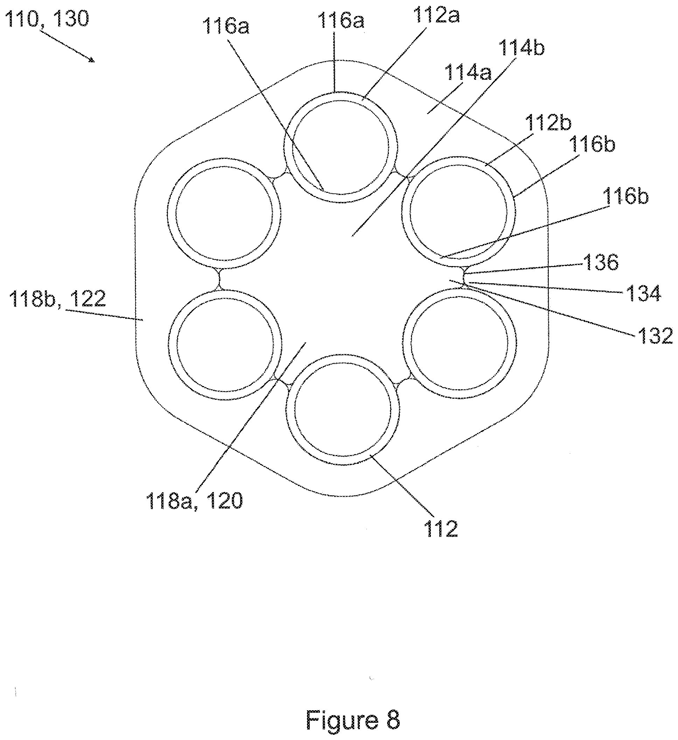

A heat exchanger for a thermochemical biomass converter according to a fourth embodiment of the invention is shown in Figures 8 to 9b and is designated generally by reference numeral 110.

The heat exchanger 110 includes first and second conduits 112a, 112b and two discrete heat transfer members 114a, 114b. The discrete heat transfer members 114a, 114b cooperate with one another to thermally connect the first and second conduits 112a, 112b to one another to define a heat transfer medium between the conduits 112a, 112b.

As described above in relation to the heat exchanger 10 shown in Figures 1a to 3, the first and second conduits 112a, 112b are configured to carry process medium of the thermochemical biomass converter in which the heat exchanger 110 is incorporated.

Also, the thermal expansion coefficient of the first and second conduits 112a, 112b matches that of the discrete heat transfer members 114a, 114b so as to continually provide thermal connection between the discrete heat transfer members 114a, 114b and the conduits 112a, 112b under changing temperature conditions.

Each of the discrete heat transfer members 114a, 114b includes a respective first and second support formation 116a, 116b. The first support formations 116a of each of the discrete heat transfer members 114a, 114b is configured to position and support the first conduit 112a within the heat exchanger 110, and the second support formations 116b of each of the discrete heat transfer members 114a, 114b is configured to position and support the second conduit 112b within the heat exchanger 110.

In the embodiment shown in Figure 8, each of the discrete heat transfer members 114a, 114b is a portion of a respective single piece heat transfer member block 118a, 118b, which is described in more detail below.

However, in other embodiments, each discrete heat transfer member 114a, 114b may instead be a standalone component, which can be joined, e.g. welded, to a neighbouring discrete heat transfer member 114a, 114b so as to share a conduit 112. The discrete heat transfer members 114a, 114b may be so joined in a linear manner (much like the heat exchanger assembly 40 described in relation to Figures 2 and 3) or in a circular manner (much like the heat exchanger assembly 80 described in relation to Figures 4 to 6b).

Returning to the embodiment shown in Figures 8 to 9b, the first heat transfer member block 118a defines an inner block 120 and the second heat transfer member block 118b defines an outer block 122, and the conduits 112a, 112b are arranged radially relative to one another.

The inner and outer blocks 120, 122 define further first and second support formations 116a, 116b arranged in a circular array relative to one another such that further conduits 112 are also arranged in a circular array. In this way, the inner and outer blocks 120, 122 and conduits 112 define a heat exchanger assembly 130.

There are six conduits 112 included in the heat exchanger assembly 130, but there may be more or fewer conduits 112.

The inner block 120 has a star-shaped profile. The arms 132 of the star extend outwards and in between neighbouring conduits 112. The outer block 122 has arms 134 that extend inwards and in between neighbouring conduits 112. Pairs of arms 132, 134 of the inner and outer blocks 120, 122 meet one another at a contact point 136 located between neighbouring conduits 112. The outer profile of the outer block 122 has a hexagonal shape, but this may take another form (e.g. circular).

The outer and inner blocks 120, 122 may be formed by extrusion, casting or cold drawing.

The heat exchanger assembly 130 can be assembled without the need for joining such as welding. Instead, the components can be assembled using a hot assembly process wherein the conduits 112 are arranged in the support formations 116 of the inner block 120, and then the outer block 122 is heated, e.g. to 700°C, and slid over the conduits 112.

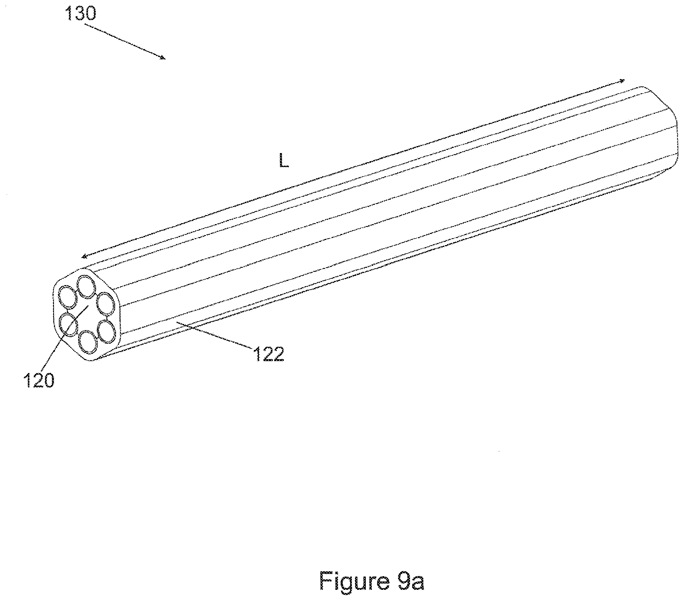

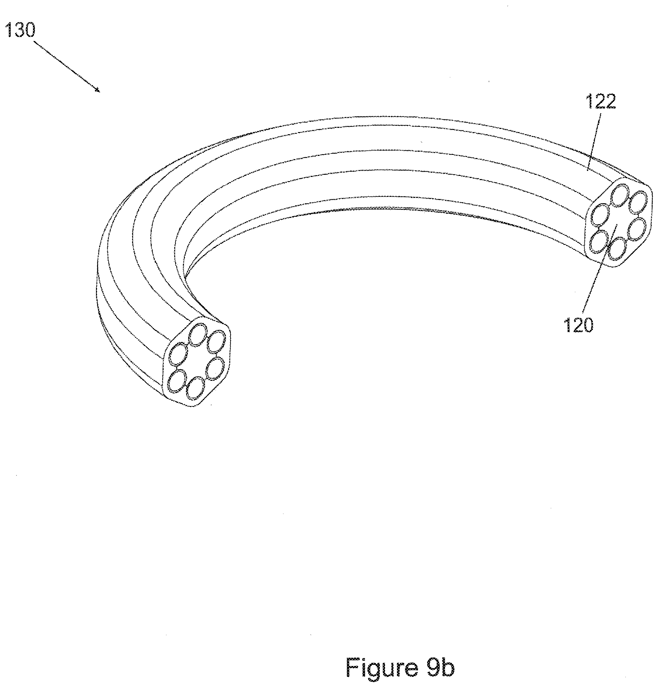

Figure 9a shows the heat exchanger assembly 130 extending in the lengthwise L direction in a straight line, i.e. for use with straight sections of conduits 112 (which are omitted from Figure 9a for clarity purposes). Figure 9b shows the heat exchanger assembly 130 extending in the lengthwise L direction in a curved manner, i.e. for use with bent/curved sections of conduits 112 (which are omitted from Figure 9b for clarity purposes).

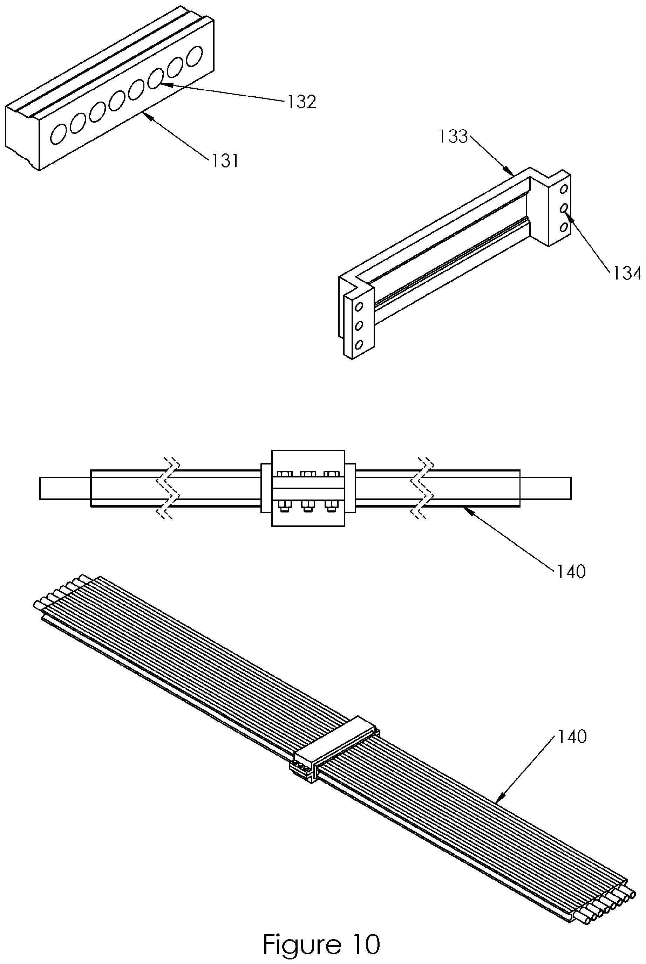

Figure 10 shows a flange 131 with clamp 133 to hold together the linear heat exchanger assembly 40 shown in Figures 2 and 3. The flange 131 is shown in perspective to show the holes 132 going though the flanges to connect to the conduits 12.The flanges with clamps provide an efficient means of connecting modular units of heat exchanger conduits, and is based on the principles from commercial high pressure clamp assemblies such and Grey-Lok ^{™} and Techloc ^{™} clamps. The combined assembly 140 combines two linear assemblies 40 employing two flanges 131 two clamps 133 bolted together with bolts going going through the bolt holes 134. Other designs, such as regular bolted flanges may be used as well, but the clamp design shown in Figure 10 has the advantage of a more compact design and ease of alignment.

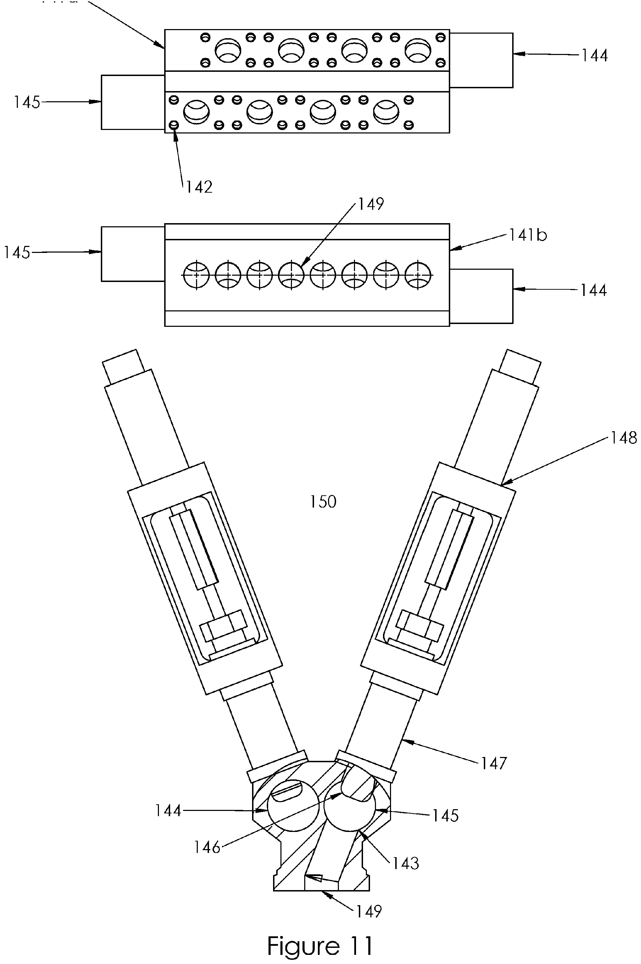

Figure 11 shows an example of a combined manifold and valve distributor 150, which provides a means of controlling the individual flow in the parallel heat exchanger conduits which allows variations in flow and pressure in the heat exchanger. Such variations are very beneficial for reducing tendencies for a fouling layer build up, as controlled flow or pressure pulses are an efficient means to remove or reduce potential deposits. In addition, it allows to compensated for the lower heat transfer to the outer conduits in the geometrical assembly, which only receive heat from one conduit instead of two. For clarity, the valve head assemblies with the corresponding actuators have been omitted on the overview drawing of the clamp 141a and 141b, indicating only the mounting holes 142 for the valvehead assemblies. These can instad be seen in the cross sectional drawing of the assembly 150 where the valve seat 143, the valve plunger 146, the valvehead sealing unit 147 and the valve actuator 148 can be seen The combined unit can be connected via the connector holes 149 in the unit to a flange 131, whereas the inlet to one set of conduits 12 is fed via a common feed tube 144 and the outlet the other set of conduits are joined in the outlet tube 145. The manifold and valve distributor can be assembled with the conduit assembly 40 using a flange 131 and clamps 133 as described above for figure 10.

In use, any one of the heat exchanger assemblies 40; 80; 100; 130; 140; 150is incorporated into a thermochemical biomass converter (not shown). The process medium (typically highly corrosive) of the converter is fed through the conduits 12; 52; 92; 112 typically at high temperature, high pressure conditions. Heat from the process medium is transferred through the thin walls of the conduits 12; 52; 92; 112 and is transferred through the transfer medium defined by the heat transfer member 14; 54; 94; 114.

As used herein, the following terms have the following meanings:
"First and second conduits" refers to piping made from a material with advantageous heat exchange properties adapted to carry fluids having first and second characteristics respectively, such as a "hotter" and "cooler" process streams or process streams "before" and "after" thermal conversion. It will be readily understood by one skilled in the art that a heat exchanger comprising "first and second conduits" may have more than one first and more than one second conduit.

"Heat transfer member" refers to a structural element formed from a material with advantageous heat exchange properties that provides a means of heat transfer.

"Support formation" refers to a contour of a heat transfer member that provides a spatially complementary fit and thereby structural support to all or part of a conduit or to all or part of a first and/or second conduit.

"Engagement surface" refers to a surface on a heat transfer member which is designed to provide a close thermal contact and spatial fit with a corresponding surface on another heat transfer member to permit assembly of a plurality of individual heat exchangers into a collective form.

"Pressure rating" of conduits refers to a calculation based on properties of piping made from various materials reported in The American Society of Mechanical Engineers (ASME) codes and standards for process piping B31.3, 2019, ISBN 9780791872260 as follows: P = "pressure rating" = internal pressure in pipe (psi) at allowable tensile stress
t = wall thickness of pipe (in)
S = allowable tensile stress (psi) according to ASME B31.3
D = outside diameter of pipe (in)
E = quality factor for the piping according to ASME B31.3
Y = wall thickness coefficient according to ASME B31.3

It will be readily understood by one skilled in the art that, although calculated in PSI, "pressure rating" can be expressed alternatively in bar.

In some embodiments, heat transfer members are made from carbon steel, cast iron, ductile cast iron, or steel alloys such as alloy 1120, 4140, 4330, or S55C .

In some embodiments, conduits are made from nickel-chromium-molybdenum-tungsten alloys such as Hastelloy C, or high-silicon nickel-chromium alloys such as Hastelloy D, or nickel-chromium alloys such as Inconel 200 or Inconel 625, or cobalt-nickel- chromium-tungsten alloys such as Haynes alloy 25, or stainless steel-chromium alloys such as 17-7PH, or titanium-manganese alloys such as Ti-8Mn.

Table 1 shows representative examples of advantageous pairings of materials for conduits and heat transfer members, showing linear thermal expansion coefficients of each.

**Table 1: Examples of materials selections and their linear thermal expansion coefficients**

| | First and second conduit | Heat transfer member | First and second conduit | Heat transfer member | difference |
|---|---|---|---|---|---|
| | | | linear thermal exp x10 +6 (K-1) | linear thermal exp x10 +6 (K-1) | |
| 1 | Inconel 625 (UNS 6625) | Carbon steel A36 | 12.8 | 11.7 | 1.1 |
| 2 | Hastelloy D | Grey Cast Iron - G3000 | 11.0 | 11.4 | 0.4 |
| 3 | Hastelloy C | Ductile cast iron -60-40-18 | 11.3 | 11.2 | 0.1 |
| 4 | Inconel 200 | Steel alloy 1120 | 11.7 | 12.3 | 0.6 |
| 5 | Stainless steel alloy 17-7PH | Steel alloy S55C | 11.0 | 11.7 | 0.7 |
| 6 | Titanium Alloy Ti-8Mn | Steel alloy 4140 | 10.8 | 11.5 | 0.7 |
| 7 | Haynes Alloy 25 | Steel alloy 4330 | 12.3 | 12.3 | 0 |

| | | | | | |
|---|---|---|---|---|---|
| Callister.W.D,JR. (2007). Materials Science and Engineering: An Introduction . 7th edition. John Wiley & Sons, Inc. and Oberg.E , Jones.D.J., Holbrook L.H, Ryffel H.H., (2012) . Machinery's Handbook . 29th edition. Industrial Press Inc., pp 376 - 377 and relates sources. | | | | | |

In some embodiments, first and second conduits are each made from the same material and have the same physical characteristics.

In some embodiments, conduit wall thickness is within the range 0.02 mm and 0.15 times the average internal diameter of the conduit.

In some embodiments, conduit internal diameter is within the range 10-80 mm, or 15-60 mm, or 20-50 mm.

In some embodiments, conduits in the absence of structural support from a heat transfer member have pressure rating between 10 and 40 bar.

In some embodiments, the thermal expansion coefficient of material used to make conduits is matched to the thermal expansion coefficient of material used to make heat transfer members such that the difference between the thermal expansion coefficients is within the range 0.0 × 10-6 K-1 to 2.5 × 10-6 K-1.

In some embodiments, the invention provides a heat exchanger for a thermochemical biomass converter comprising-
- at least two conduits made from a first material each having wall thickness within the range 0.02 mm and 0.15 times the average internal diameter of the conduit and each adapted to carry process medium, and;
- a heat transfer member made from a second material having thermal expansion coefficient that differs from the thermal expansion coefficient of the first material by an amount within the range 0.0 × 10 -6 K-1 and 2.5 × 10-6 K-1 which provides a heat transfer medium between the conduits and which provides support formations for each of the at least two conduits,
wherein the at least two conduits in the absence of the heat transfer member have pressure rating within the range 5 to 75 bar.

In some embodiments, the at least two conduits correspond to a first and second conduit adapted to carry process stream before and after thermal conversion respectively.

In some embodiments, the heat transfer member is a single piece providing support formation contacting the entire surface of the at least two conduits such that the heat exchanger is functional without requirement for joining a plurality of individual heat exchangers into a collective form.

In some embodiments, the support formation of a heat transfer member contacts only a part of the surface of each of the at least two conduits and the heat exchanger is designed to be joined as an individual component with a plurality of similar individual heat exchangers to form a collective assembly.

In some embodiments, individual heat exchangers comprise a heat transfer member having engagement surfaces to facilitate assembly of a plurality of individual heat exchangers into a collective assembly.

In some embodiments, the individual heat exchanger is symmetrical about a first axis which passes through the heat transfer member and center of each of the at least two conduits and is further symmetrical about a second axis which passes through the center of the heat transfer member and which is perpendicular to the first axis.

In some embodiments, the heat transfer member has an I-shaped profile with support formations as two semi-circular indentations each bounded by flat engagement surfaces that are perpendicular to the first axis.

In some embodiments, the individual heat exchanger tapers from a wider portion on one side of the first axis to a narrow portion on the other side of the first axis and is adapted to be joined with a plurality of similar individual heat exchangers as a circular array by having a heat transfer member with engagement surfaces that extend at an angle relative to the first axis.

One skilled in the art will readily determine how to make heat exchangers of the invention without undue experimentation. Heat transfer members can typically be formed by extrusion, hot rolling, cold drawing or molding. Conduits can be either seamless or welded piping. When assembling a heat exchanger of the invention, including collective assemblies of a plurality of individual heat exhangers, conduits can be made with slight differences of fit to permit intentional expansion of the material into an expanded fit with the heat transfer member. Expansion of conduits into an expanded fit can be conducted by a variety of mean known in the art including mechanical or hydraulic expansion.

### Examples

### 1. Preparation of a short test section of the heat exchanger shown in Figure 7.

In order to validate the invention, test sections of the heat exchanger shown in Figure 7 were produced. In this example, a 0.55 m section with 3 hot conduit tubes (transfer of heat) and 3 cold conduit tubes (receiving heat) made out of a high nickel and chrome alloy (UNS 6625) was ordered in a hexagonal and alternating pattern inside a 100 black steel (A36S) rod acting as the heat transfer member and having thermal expansion coefficient of 12.5 × 10-6 K-1. The 6 conduit tubes each having a pressure rating of 70 bar, a thermal expansion coefficient of 12.7 × 10-6 K-1, an internal diameter of 23.6 mm and a wall thickness of 1.6 mm were placed inside 27.2 mm through holes drilled in the solid steel rod along the length of the rod with 60° separation between holes. The thin walled alloy tubes were at the ends mechanically expanded and welded to a 120 mm diameter 12 mm thick seal plate in the same high alloy steel, and the unit was then equipped with heavy duty flanges welded to the ends of the heat transfer member. In order to ensure good thermal and mechanical contact between the inner tube and the steel rod the inner tube was hydraulically expanded using water as pressure medium to a pressure of 1000 bar, which is well above the hydraulic pressure needed to give permanent deformation of the inner tube. The unit was filled with water inside the six conduit tubes, which in one end were closed with high pressure resistant plugs and in the other end with corresponding plugs with hydraulic connectors. The hydraulic connectors were connected to an air driven high pressure pump (RESATO Tm model MPS) via high pressure hydraulic hoses, and were expanded to the desired pressure in 100 bar steps to the desired pressure in this case 1000 bar.

### 2. Additional hydraulic expansion of the short test section.

The assembly in example 1 was further hydraulically expanded to 1500 bar.

### 3. Preparation of a longer test section of the heat exchanger shown in Figure 7.

A 2.75 m long test heat exchanger was prepared by welding together 5 pieces of predrilled heat transfer member together with careful alignment, and lining these with thin walled high alloy conduit tubes and seal plates as well as heavy duty steel flanges as described in example 1. The inner tube/liner was expanded using a hydraulic pressure of 800 bar according to the procedure in example 1.

### 4. Additional hydraulic expansion of the longer test section.

The assembly in example 3 was further hydraulically expanded to 1500 bar.

### 5. Heat transfer in the longer test section.

The assemblies described in examples 3 and 4 were connected to specially designed manifold flanges that smoothly directed the three cold exchanger tubes into one 45 mm central collector tube whereas the hot heat exchanger tubes were connected to a peripheral collector tube. In this way the cold feed, which in general had the highest viscosity, was subjected to minimum resistance when feeding into the heat exchanger. This is especially important for high viscosity feeds as employed in hydrothermal conversion processes. The whole assembly was insulated with 2 × 50 mm mineral wool mats, in order to minimize heat loss to the surroundings, then subjected to heat transfer tests to validate efficiency under varying flow and temperature conditions. A summary of the transfer data are given in table 2 . In order to get the highest sensitivity to imperfections in the assembled heat exchanger, the heat transfer was measured at relatively low temperature as seen below and at low pressure (2-5 bar). These conditions are especially challenging and relevant for the evaluation of the heat exchange efficiency, as the low pressure will not contribute to (i) the mechanical thermal contact between the conduits and the heat transfer member and (ii) the radiative and convective heat transfer via imperfections in the interface between the conduits and the heat transfer member at these relatively low temperatures.

The thermal transfer (Energy transfer) was measured by careful logging of the inlet temperature and the outlet temperature of the hot and the cold stream simultaneously as well as the volumetric flow though the hot and the cold conduits. The energy transfer is calculated as flow × Temperature difference × heat capacity of the water. The numbers given in table × are the average of the values for the hot and cold streams.

**Table 2**

| | Flow (l/min for 3 tubes) | Temperature Difference (°C) | Expansion pressure (Bar) | Energy transfer (KW/m) |
|---|---|---|---|---|
| 1 | 20 | 28 | 800 | 1.7 |
| 2 | 40 | 28 | 800 | 2.9 |
| 3 | 62 | 28 | 800 | 3.4 |
| 4 | 40 | 40 | 800 | 4.0 |
| 5 | 68 | 40 | 800 | 5.3 |
| 6 | 20 | 28 | 1500 | 2.7 |
| 7 | 40 | 28 | 1500 | 4.0 |
| 8 | 62 | 28 | 1500 | 5.4 |
| 9 | 40 | 40 | 1500 | 6.8 |
| 10 | 68 | 40 | 1500 | 9.0 |

It is notable that the results obtained show that heat transfer efficiency is highly influenced by the hydraulic expansion whereby the thin conduits were fit into the corresponding support formations of the heat transfer member. The data obtained for the high expansion pressure series are close to the theoretical values calculated using standard engineering methods taking into account also the fluid dynamics. However, the properties may still be improved further by higher expansion pressures and or combination with mechanical expansion, which can create even higher local pressures.

The embodiments and examples given are exemplative only and not intended to limit the scope of the invention as defined by the claims.

## Claims

1. A heat exchanger (10, 50, 90, 100, 110) for a thermochemical biomass converter, the heat exchanger (10, 50, 90, 100, 110) comprising first and second conduits (12a, 12b, 52a, 52b, 112a, 112b) being configured to carry, in use, process medium of the converter, and a heat transfer member (14, 54, 94, 114a, 114b) thermally connecting the first and second conduits (12a, 12b, 52a, 52b, 112a, 112b) to one another to define a heat transfer medium between the conduits (12a, 12b, 52a, 52b, 112a, 112b), wherein the heat transfer member (14, 54, 94, 114a, 114b) includes first and second support formations (16a, 16b, 56a, 56b, 116a, 116b) configured to position and support a respective first and second conduit in the heat exchanger (10),
**characterized in that** the heat transfer member (14, 54, 94, 114a, 114b) has a higher heat conductivity than the materials used for the first and second conduit (12a, 12b, 52a, 52b, 112a, 112b); and
wherein the conduits (12a, 12b, 52a, 52b, 112a, 112b) are made with an intentional expansion of the conduit material into an expanded fit with the heat transfer member (14, 54, 94, 114a, 114b);
and further **characterized in that** conduits (12a, 12b, 52a, 52b, 112a, 112b) in the absence of structural support from a heat transfer member (14, 54, 94, 114a, 114b) have pressure rating within the range 5 to 75 bar but in combination with a single heat transfer member (14, 54, 94, 114a, 114b) or with a plurality of similar individual heat transfer members (14, 54, 94, 114a, 114b) can operate at pressures within the range 100 to 300 bar.

2. A heat exchanger (10, 50, 90, 100, 110) according to claim 1, wherein expansion of the conduit material into an expanded fit with the heat transfer member (14, 54, 94, 114a, 114b) is made using mechanical and/or hydraulic expansion.

3. A heat exchanger (10, 50, 90, 100, 110) according to claim 1 or 2, wherein conduit wall thickness is within the range 0.02 mm and 0.15 times the average internal diameter of the conduit (12a, 12b, 52a, 52b, 112a, 112b).

4. A heat exchanger (90, 100) according to any of claims 1-3, wherein the heat transfer member (94) is a single piece providing support formation (98) contacting the entire surface of the conduits (92) such that the heat exchanger (90,100) is functional without requirement for joining a plurality of individual heat exchangers into a collective form.

5. A heat exchanger (10, 50, 110) according to any of claims 1-3, wherein the support formation (16a, 16b, 56a, 56b, 116a, 116b) of a heat transfer member (14, 54, 114a, 114b) contacts only a part of the surface of each of the at least two conduits (12a, 12b, 52a, 52b, 112a, 112b) and the heat exchanger (10, 50, 110) is designed to be joined as an individual component with a plurality of similar individual heat exchangers to form a collective assembly.

6. A heat exchanger (10, 50, 90, 100, 110) according to any of claims 1-5, wherein individual heat exchangers comprise a heat transfer member (14, 54, 94, 114a, 114b) having engagement surfaces to facilitate assembly of a plurality of individual heat exchangers into a collective assembly.

7. A heat exchanger (10, 50, 90, 100, 110) according to claim 6, wherein an individual heat exchanger is symmetrical about a first axis (A1) which passes through the heat transfer member (14, 54, 94, 114a, 114b) and center of each of the at least two conduits (12a, 12b, 52a, 52b, 112a, 112b) and is further symmetrical about a second axis (A2) which passes through the center of the heat transfer member (14, 54, 94, 114a, 114b) and which is perpendicular to the first axis (A1).

8. A heat exchanger (10) according to claim 7, wherein the heat transfer member (14) has an I-shaped profile with support formations (16a, 16b) as two semi-circular indentations each bounded by flat engagement surfaces that are perpendicular to the first axis (A1).

9. A heat exchanger (50) according to claim 7, wherein an individual heat exchanger tapers from a wider portion on one side of the first axis (A1) to a narrow portion on the other side of the first axis (A1) and is adapted to be joined with a plurality of similar individual heat exchangers as a circular array by having a heat transfer member (54) with engagement surfaces that extend at an angle relative to the first axis (A1).

10. A heat exchanger (10, 50, 90, 100, 110) according to any of claims 1-9, wherein the first and second support formations (16a, 16b, 56a, 56b, 116a, 116b) are configured to abut a contact portion (18a, 18b, 58a, 58b) of a respective first and second conduit (12a, 12b, 52a, 52b, 112a, 112b), the remaining portion of each first and second conduit (12a, 12b, 52a, 52b, 112a, 112b) being exposed relative to the respective support formation (16a, 16b, 56a, 56b, 116a, 116b).

11. A heat exchanger (10, 50, 90, 100, 110) according to any of claims 1-10, wherein the heat transfer member (14, 54, 94, 114a, 114b) is made from steel.

12. A heat exchanger assembly (40, 80, 130, 140, 150) including a plurality of heat exchangers according to any of claims 1-11 arranged adjacent to one another so that neighbouring heat transfer members (14, 54, 114a, 114b) share a conduit (12a, 12b, 52a 52b, 112a, 112b).

13. A heat exchanger assembly (40, 80, 130, 140, 150) according to claim 12 having two discrete heat transfer members (14, 54, 114a, 114b) each of which is a single block

14. A heat exchanger assembly (130) according to claim 13, wherein a first discrete heat transfer member (114a, 114b) defines an outer block while a second discrete heat transfer member (114a, 114b) defines an inner block and wherein the first and second support formations (116a, 116b) of each discrete heat transfer member (114a, 114b) are arranged in a circular array such that the conduits (112a, 112b) are also arranged in a circular array.

15. A thermochemical biomass converter including a heat exchanger (10, 50, 90, 100, 110) according to any one of claims 1 to 11 or a heat exchanger assembly according to any of claims 12-14.

## Patentansprüche

1. Wärmetauscher (10, 50, 90, 100, 110) für einen thermochemischen Biomassewandler, wobei der Wärmetauscher (10, 50, 90, 100, 110) eine erste und eine zweite Leitung (12a, 12b, 52a, 52b, 112a, 112b) umfasst, die konfiguriert sind, um im Gebrauch Prozessmedium des Wandlers zu tragen, und ein Wärmeübertragungselement (14, 54, 94, 114a, 114b), das die erste und die zweite Leitung (12a, 12b, 52a, 52b, 112a, 112b) thermisch miteinander verbindet, um ein Wärmeübertragungsmedium zwischen den Leitungen (12a, 12b, 52a, 52b, 112a, 112b) zu definieren, wobei das Wärmeübertragungselement (14, 54, 94, 114a, 114b) eine erste und eine zweite Stützformation (16a, 16b, 56a, 56b, 116a, 116b) einschließt, die konfiguriert sind, um eine jeweilige erste und zweite Leitung in dem Wärmetauscher (10) zu positionieren und zu stützen,
**dadurch gekennzeichnet, dass** das Wärmeübertragungselement (14, 54, 94, 114a, 114b) eine höhere Wärmeleitfähigkeit als die für die erste und die zweite Leitung (12a, 12b, 52a, 52b, 112a, 112b) verwendeten Materialien aufweist; und
wobei die Leitungen (12a, 12b, 52a, 52b, 112a, 112b) mit einer beabsichtigten Expansion des Leitungsmaterials in eine erweiterte Passung mit dem Wärmeübertragungselement (14, 54, 94, 114a, 114b) hergestellt sind;
und ferner **dadurch gekennzeichnet, dass** Leitungen (12a, 12b, 52a, 52b, 112a, 112b) ohne strukturelle Unterstützung von einem Wärmeübertragungselement (14, 54, 94, 114a, 114b) eine Druckklassifizierung innerhalb des Bereichs von 5 bis 75 bar aufweisen, aber in Kombination mit einem einzelnen Wärmeübertragungselement (14, 54, 94, 114a, 114b) oder mit einer Vielzahl von ähnlichen einzelnen Wärmeübertragungselementen (14, 54, 94, 114a, 114b) bei Drücken innerhalb des Bereichs von 100 bis 300 bar arbeiten können.

2. Wärmetauscher (10, 50, 90, 100, 110) nach Anspruch 1, wobei die Expansion des Leitungsmaterials in eine expandierte Passung mit dem Wärmeübertragungselement (14, 54, 94, 114a, 114b) unter Verwendung von mechanischer und/oder hydraulischer Expansion erfolgt.

3. Wärmetauscher (10, 50, 90, 100, 110) nach Anspruch 1 oder 2, wobei die Leitungswanddicke im Bereich zwischen 0,02 mm und dem 0,15-fachen des mittleren Innendurchmessers der Leitung (12a, 12b, 52a, 52b, 112a, 112b) liegt.

4. Wärmetauscher (90, 100) nach einem der Ansprüche 1-3, wobei das Wärmeübertragungselement (94) ein einzelnes Stück ist, das eine Stützformation (98) bereitstellt, die die gesamte Oberfläche der Leitungen (92) berührt, sodass der Wärmetauscher (90, 100) funktionsfähig ist, ohne dass eine Vielzahl von einzelnen Wärmetauschern zu einer kollektiven Form verbunden werden muss.

5. Wärmetauscher (10, 50, 110) nach einem der Ansprüche 1-3, wobei die Stützformation (16a, 16b, 56a, 56b, 116a, 116b) eines Wärmeübertragungselements (14, 54, 114a, 114b) nur einen Teil der Oberfläche jeder der mindestens zwei Leitungen (12a, 12b, 52a, 52b, 112a, 112b) berührt und der Wärmetauscher (10, 50, 110) dazu ausgelegt ist, als eine einzelne Komponente mit einer Vielzahl ähnlicher einzelner Wärmetauscher verbunden zu werden, um eine Gesamtanordnung zu bilden.

6. Wärmetauscher (10, 50, 90, 100, 110) nach einem der Ansprüche 1-5, wobei einzelne Wärmetauscher ein Wärmeübertragungselement (14, 54, 94, 114a, 114b) umfassen, das Eingriffsflächen aufweist, um die Montage einer Vielzahl von einzelnen Wärmetauschern zu einer Gesamtanordnung zu erleichtern.

7. Wärmetauscher (10, 50, 90, 100, 110) nach Anspruch 6, wobei ein einzelner Wärmetauscher um eine erste Achse (A1) symmetrisch ist, die durch das Wärmeübertragungselement (14, 54, 94, 114a, 114b) und die Mitte jeder der mindestens zwei Leitungen (12a, 12b, 52a, 52b, 112a, 112b) verläuft und ferner um eine zweite Achse (A2) symmetrisch ist, die durch die Mitte des Wärmeübertragungselements (14, 54, 94, 114a, 114b) verläuft und die senkrecht zu der ersten Achse (A1) ist.

8. Wärmetauscher (10) nach Anspruch 7, wobei das Wärmeübertragungselement (14) ein I-förmiges Profil mit Stützformationen (16a, 16b) als zwei halbkreisförmige Vertiefungen aufweist, die jeweils durch flache Eingriffsflächen begrenzt sind, die senkrecht zu der ersten Achse (A1) sind.

9. Wärmetauscher (50) nach Anspruch 7, wobei sich ein einzelner Wärmetauscher von einem breiteren Abschnitt auf einer Seite der ersten Achse (A1) zu einem schmalen Abschnitt auf der anderen Seite der ersten Achse (A1) verjüngt und angepasst ist, um mit einer Vielzahl von ähnlichen einzelnen Wärmetauschern als ein kreisförmiges Array verbunden zu werden, indem er ein Wärmeübertragungselement (54) mit Eingriffsflächen aufweist, die sich in einem Winkel relativ zu der ersten Achse (A1) erstrecken.

10. Wärmetauscher (10, 50, 90, 100, 110) nach einem der Ansprüche 1-9, wobei die erste und die zweite Stützformation (16a, 16b, 56a, 56b, 116a, 116b) so konfiguriert sind, dass sie an einem Kontaktabschnitt (18a, 18b, 58a, 58b) einer jeweiligen ersten und zweiten Leitung (12a, 12b, 52a, 52b, 112a, 112b) anliegen, wobei der verbleibende Abschnitt jeder ersten und zweiten Leitung (12a, 12b, 52a, 52b, 112a, 112b) relativ zu der jeweiligen Stützformation (16a, 16b, 56a, 56b, 116a, 116b) freiliegt.

11. Wärmetauscher (10, 50, 90, 100, 110) nach einem der Ansprüche 1-10, wobei das Wärmeübertragungselement (14, 54, 94, 114a, 114b) aus Stahl hergestellt ist.

12. Wärmetauscheranordnung (40, 80, 130, 140, 150), die eine Vielzahl von Wärmetauschern nach einem der Ansprüche 1 bis 11 einschließt, die benachbart zueinander angeordnet sind, sodass benachbarte Wärmeübertragungselemente (14, 54, 114a, 114b) eine Leitung (12a, 12b, 52a, 52b, 112a, 112b) teilen.

13. Wärmetauscheranordnung (40, 80, 130, 140, 150) nach Anspruch 12 mit zwei diskreten Wärmeübertragungselementen (14, 54, 114a, 114b), die jeweils ein einzelner Block sind.

14. Wärmetauscheranordnung (130) nach Anspruch 13, wobei ein erstes diskretes Wärmeübertragungselement (114a, 114b) einen äußeren Block definiert, während ein zweites diskretes Wärmeübertragungselement (114a, 114b) einen inneren Block definiert und wobei die erste und die zweite Stützformation (116a, 116b) jedes diskreten Wärmeübertragungselements (114a, 114b) in einem kreisförmigen Array derart angeordnet sind, dass die Leitungen (112a, 112b) auch in einem kreisförmigen Array angeordnet sind.

15. Thermochemischer Biomassewandler, der einen Wärmetauscher (10, 50, 90, 100, 110) nach einem der Ansprüche 1 bis 11 oder eine Wärmetauscheranordnung nach einem der Ansprüche 12 bis 14 einschließt.

## Revendications

1. Échangeur de chaleur (10, 50, 90, 100, 110) pour un convertisseur de biomasse thermochimique, l'échangeur de chaleur (10, 50, 90, 100, 110) comprenant des premier et second conduits (12a, 12b, 52a, 52b, 112a, 112b) étant configurés pour porter, en utilisation, un milieu de traitement du convertisseur, et un élément de transfert de chaleur (14, 54, 94, 114a, 114b) reliant thermiquement les premier et second conduits (12a, 12b, 52a, 52b, 112a, 112b) les uns aux autres pour définir un milieu de transfert de chaleur entre les conduits (12a, 12b, 52a, 52b, 112a, 112b), dans lequel l'élément de transfert de chaleur (14, 54, 94, 114a, 114b) comporte des première et seconde formations de support (16a, 16b, 56a, 56b, 116a, 116b) configurées pour positionner et supporter un premier et second conduit respectif dans l'échangeur de chaleur (10),
**caractérisé en ce que** l'élément de transfert de chaleur (14, 54, 94, 114a, 114b) a une conductivité thermique plus élevée que les matériaux utilisés pour le premier et second conduit (12a, 12b, 52a, 52b, 112a, 112b) ; et
dans lequel les conduits (12a, 12b, 52a, 52b, 112a, 112b) sont réalisés avec une expansion intentionnelle du matériau de conduit dans un ajustement expansé avec l'élément de transfert de chaleur (14, 54, 94, 114a, 114b) ;
et en outre **caractérisé en ce que** des conduits (12a, 12b, 52a, 52b, 112a, 112b) en l'absence de support structurel d'un élément de transfert de chaleur (14, 54, 94, 114a, 114b) ont une pression nominale dans la plage de 5 à 75 bars mais en combinaison avec un unique élément de transfert de chaleur (14, 54, 94, 114a, 114b) ou avec une pluralité d'éléments de transfert de chaleur individuels similaires (14, 54, 94, 114a, 114b) peuvent fonctionner à des pressions dans la plage de 100 à 300 bars.

2. Échangeur de chaleur (10, 50, 90, 100, 110) selon la revendication 1, dans lequel l'expansion du matériau de conduit dans un ajustement expansé avec l'élément de transfert de chaleur (14, 54, 94, 114a, 114b) est réalisée à l'aide d'une expansion mécanique et/ou hydraulique.

3. Échangeur de chaleur (10, 50, 90, 100, 110) selon la revendication 1 ou 2, dans lequel l'épaisseur de paroi de conduit est comprise entre 0,02 mm et 0,15 fois le diamètre interne moyen du conduit (12a, 12b, 52a, 52b, 112a, 112b).

4. Échangeur de chaleur (90, 100) selon l'une quelconque des revendications 1 à 3, dans lequel l'élément de transfert de chaleur (94) est une pièce unique fournissant une formation de support (98) en contact avec toute la surface des conduits (92) de telle sorte que l'échangeur de chaleur (90, 100) est fonctionnel sans exigence pour joindre une pluralité d'échangeurs de chaleur individuels à une forme collective.

5. Échangeur de chaleur (10, 50, 110) selon l'une quelconque des revendications 1 à 3, dans lequel la formation de support (16a, 16b, 56a, 56b, 116a, 116b) d'un élément de transfert de chaleur (14, 54, 114a, 114b) entre en contact uniquement avec une partie de la surface de chacun des au moins deux conduits (12a, 12b, 52a, 52b, 112a, 112b) et l'échangeur de chaleur (10, 50, 110) est conçue pour être jointe comme un composant individuel avec une pluralité d'échangeurs de chaleur individuels similaires pour former un ensemble collectif.

6. Échangeur de chaleur (10, 50, 90, 100, 110) selon l'une quelconque des revendications 1 à 5, dans lequel des échangeurs de chaleur individuels comprennent un élément de transfert de chaleur (14, 54, 94, 114a, 114b) ayant des surfaces de mise en prise pour faciliter la mise ensemble d'une pluralité d'échangeurs de chaleur individuels dans un ensemble collectif.

7. Échangeur de chaleur (10, 50, 90, 100, 110) selon la revendication 6, dans lequel un échangeur de chaleur individuel est symétrique autour d'un premier axe (A1) qui traverse l'élément de transfert de chaleur (14, 54, 94, 114a, 114b) et le centre de chacun des au moins deux conduits (12a, 12b, 52a, 52b, 112a, 112b) et est en outre symétrique autour d'un second axe (A2) qui passe par le centre de l'élément de transfert de chaleur (14, 54, 94, 114a, 114b) et qui est perpendiculaire au premier axe (A1).

8. Échangeur thermique (10) selon la revendication 7, dans lequel l'élément de transfert de chaleur (14) a un profil en forme de I avec des formations de support (16a, 16b) comme deux indentations semi-circulaires chacune délimitée par des surfaces de mise en prise plates qui sont perpendiculaires au premier axe (A1).

9. Échangeur de chaleur (50) selon la revendication 7, dans lequel un échangeur de chaleur individuel se rétrécit d'une partie plus large sur un côté du premier axe (A1) à une partie étroite sur l'autre côté du premier axe (A1) et est adapté pour être relié à une pluralité d'échangeurs de chaleur individuels similaires comme un réseau circulaire en ayant un élément de transfert de chaleur (54) avec des surfaces de mise en prise qui s'étendent selon un angle par rapport au premier axe (A1).

10. Échangeur de chaleur (10, 50, 90, 100, 110) selon l'une quelconque des revendications 1 à 9, dans lequel les première et seconde formations de support (16a, 16b, 56a, 56b, 116a, 116b) sont configurées pour venir en butée contre une partie de contact (18a, 18b, 58a, 58b) d'un premier et second conduit respectif (12a, 12b, 52a, 52b, 112a, 112b), la partie restante de chaque premier et second conduit (12a, 12b, 52a, 52b, 112a, 112b) étant exposée par rapport à la formation de support respective (16a, 16b, 56a, 56b, 116a, 116b).

11. Échangeur de chaleur (10, 50, 90, 100, 110) selon l'une quelconque des revendications 1 à 10, l'élément de transfert de chaleur (14, 54, 94, 114a, 114b) est réalisé en acier.

12. Ensemble échangeur de chaleur (40, 80, 130, 140, 150) comportant une pluralité d'échangeurs de chaleur selon l'une quelconque des revendications 1 à 11 agencés adjacents les uns aux autres de sorte que des éléments de transfert de chaleur voisins (14, 54, 114a, 114b) partagent un conduit (12a, 12b, 52a, 52b, 112a, 112b).

13. Ensemble échangeur de chaleur (40, 80, 130, 140, 150) selon la revendication 12 ayant deux éléments de transfert de chaleur distincts (14, 54, 114a, 114b) dont chacun est un bloc unique.

14. Ensemble échangeur de chaleur (130) selon la revendication 13, dans lequel un premier élément de transfert de chaleur distinct (114a, 114b) définit un bloc externe tandis qu'un second élément de transfert de chaleur distinct (114a, 114b) définit un bloc interne et dans lequel les première et seconde formations de support (116a, 116b) de chaque élément de transfert de chaleur distinct (114a, 114b) sont agencées dans un réseau circulaire de telle sorte que les conduits (112a, 112b) sont également agencés dans un réseau circulaire.

15. Convertisseur de biomasse thermochimique comportant un échangeur de chaleur (10, 50, 90, 100, 110) selon l'une quelconque des revendications 1 à 11 ou un ensemble échangeur de chaleur selon l'une quelconque des revendications 12 à 14.
